Europäisches Patentamt

European Patent Office

Office européen des brevets

(19)

(11) Veröffentlichungsnummer : **0 105 469 B1**

(12) **EUROPÄISCHE PATENTSCHRIFT**

(45) Veröffentlichungstag der Patentschrift :
18.06.86

(21) Anmeldenummer : **83109710.0**

(22) Anmeldetag : **28.09.83**

(51) Int. Cl.⁴ : **A 47 J 39/00**, A 47 J 41/00

(54) Kochkiste zum Nachgaren von Lebensmitteln.

(30) Priorität : 02.10.82 DE 3236537

(43) Veröffentlichungstag der Anmeldung :
18.04.84 Patentblatt 84/16

(45) Bekanntmachung des Hinweises auf die Patenterteilung : 18.06.86 Patentblatt 86/25

(84) Benannte Vertragsstaaten :
AT BE CH DE FR GB IT LI LU NL SE

(56) Entgegenhaltungen :
WO-A-81 /009 58
DE-A- 1 942 218
DE-A- 2 925 316
DE-C-   153 917
DE-U- 7 807 443
US-A- 3 818 180

(73) Patentinhaber : **Wiemer, Herbert**
**Höhenweg 42**
**D-6955 Aglasterhausen (DE)**

(72) Erfinder : **Wiemer, Herbert**
**Höhenweg 42**
**D-6955 Aglasterhausen (DE)**

(74) Vertreter : **Hach, Hans Karl, Dr.**
**Tarunstrasse 23**
**D-6950 Mosbach-Waldstadt (DE)**

**Beschreibung**

Die Erfindung betrifft eine Kochkiste zum Nachgaren von in einem Kochtopf enthaltenen, vorgewärmten Lebensmitteln mit einem zweiteiligen Formkörper aus thermisch isolierendem Hartschaum, in dem die Außenform des zugehörigen Kochtopfes einschließlich aller Topf- und Deckelgriffe toleranzarm ausgespart ist, mit Aussparungen in jedem der beiden Formteile, die in Einschubrichtung frei von Hinterschnitten sind.

Eine solche Kochkiste ist aus der DE-U-7 807 443 bekannt. Bei der Herstellung einer solchen Kochkiste entsteht eine rauhe Oberflächenstruktur, die Kunststoffporen reliefartig oder angeschnitten erkennen läßt.

Aufgabe der Erfindung ist es, eine Kochkiste der eingangs genannten Art so auszugestalten, daß sie bei geringem Platzbedarf hohe Wirksamkeit entfaltet und leicht zu handhaben ist.

Die Erfindung ist dadurch gekennzeichnet, daß die Oberflächenbereiche beider Formteile innen und außen aus verdichtetem Hartschaummaterial mit glatter Oberflächenstruktur bestehen und daß am Boden der Aussparung des unteren Formteils ein hitzebeständiger Abstandshalter aus Metall eingelassen und verankert ist, der für den eingesetzten Topf einen Abstand vom Boden freihält. Durch die verdichtete glatte Oberflächenstruktur ist diese hart und leicht zu reinigen, und zwar ohne Inkaufnahme von Wärmeisolationswirkung, weil diese vor allem durch die unterhalb der Oberfläche gelegenen unverdichteten Bezirke des Schaummaterials erzielt wird. Die verdichtete Oberfläche ist auch widerstandsfähiger gegen den Hitzekontakt mit einem eingestellten Topf. Die eingestellten Töpfe können heißer sein, wodurch größere Wirksamkeit entfaltet wird. Dem gleichen Zweck dient der Abstandshalter, der die unmittelbare Hitzeeinwirkung von dem besonders heißen Boden des Topfes, deren Wirkung vom Gewicht des Topfes noch verstärkt wird, abhält.

Die Erfindung wird nun anhand der beigefügten Zeichnung, in der einige Ausführungsbeispiele dargestellt sind, näher erläutert.

Kurze Beschreibung der Zeichnungen

In der Zeichnung zeigt :

Figur 1 einige geschlossene, quaderförmige Kochkiste,

Figur 2 das untere Formteil aus Figur 1 mit eingestelltem Kochtopf,

Figur 3 die Ansicht gemäß dem Pfeil III aus Figur 2, jedoch ohne den Kochtopf,

Figur 4 in der Ansicht entsprechend Figur 3 das untere Formteil einer Kochkiste mit kreiszylindrischer Außenform,

Figur 5 entsprechend den Schnittpfeilen V das untere Formteil aus Figur 4 mit aufgesetztem oberen Formteil,

Figur 6 in der Schnittdarstellung entsprechend Figur 5 eine andere Kochkiste mit kreiszylindrischer Außenform,

Figur 7 eine Kochkiste mit quaderförmiger Außenform und vertikaler Trennebene im vertikalen Schnitt,

Figur 8 ebenfalls im vertikalen Schnitt eine Kochkiste mit quaderförmiger Außenkontur und vertikaler Trennebene,

Figur 9 den Schnitt entsprechend den Pfeilen IX aus Figur 8, und

Figur 10 zwei quaderförmige Kochkisten mit vertikaler Trennebene entsprechend Figur 8 und 9, stapelbar und ausgerüstet mit Verrutschungssicherungen.

Bester Weg zur Ausführung der Erfindung

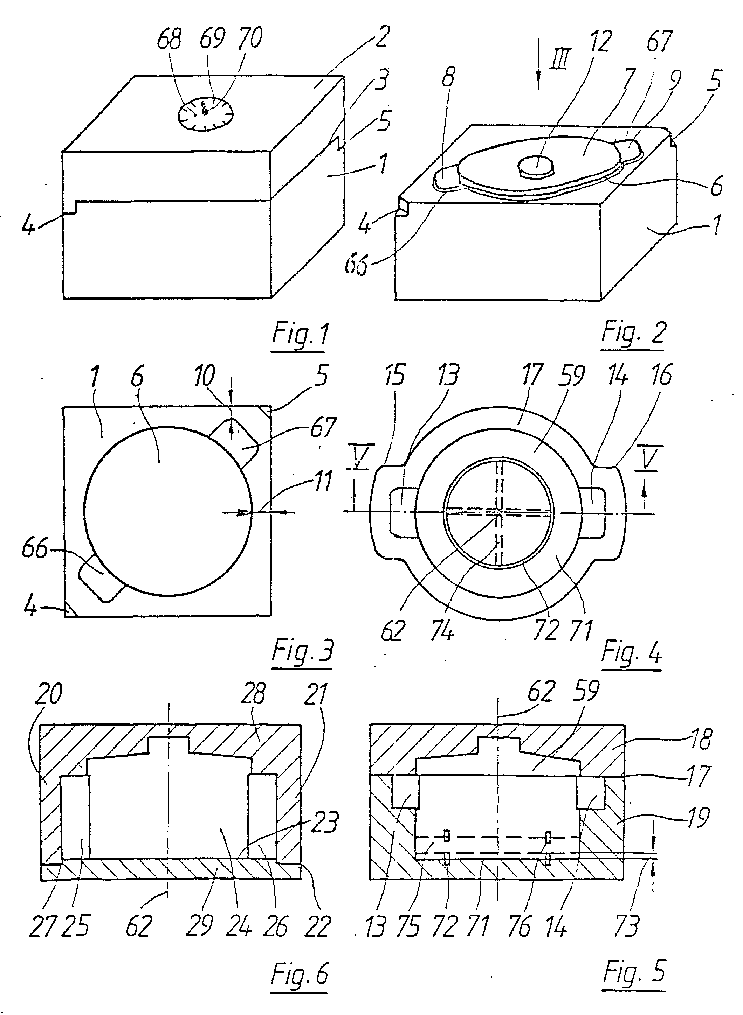

Gemäß Figur 1 bis 3 ist mit 1 das Unterteil und mit 2 das Oberteil einer Kochkiste bezeichnet. Die beiden Teile 1, 2 passen entlang der horizontalen Trennebene 3, entlang derer sie an diametral gegenüberliegenden Ecken mit Abstufungen 4 und 5 ausgestattet sind, formschlüssig aufeinander. In beiden Teilen 1, 2 ist eine Aussparung 6 ausgespart, in die mit sehr wenig Toleranz ein mit einem Deckel verschlossener Kochtopf 7 paßt, der seitliche, diametral einander gegenüberliegende Griffe 8 und 9 und einen Deckelgriff 12 aufweist. Für die seitlichen Griffe 8, 9 sind Ausbuchtungen 66, 67 vorgesehen und für den Deckelgriff ist eine weitere, in der Zeichnung nicht sichtbare Ausbuchtung im Oberteil 2 vorgesehen.

Die Trennebene 3 liegt auf der Höhe der Griffe 8, 9, so daß sich für beide Teile Aussparungen — die Aussparung 6 und die nicht sichtbare Aussparung des Oberteils 2 — eine hinterschnittfreie Ausgestaltung ergibt.

Oben auf dem Oberteil 2 ist eine Zeitscheibe 68 angebracht, die einen gegenüber einer kreisrunden Zeitskala 69 handverstellbaren Zeiger 70 aufweist, so daß dort eine Gar-Endzeit oder eine andere Zeit markierbar ist.

Die Mindestwandstärke gemäß Doppelpfeil 10 im Bereich der Griffe 8, 9 beträgt 20 mm. Im übrigen beträgt die Mindestwandstärke gemäß Doppelpfeil 11 30 mm ; das gilt auch für die Wandstärke am Boden, also unter dem Topfboden, und im Bereich des Deckels, also über dem Topfdeckel.

Bei dem Ausführungsbeispiel gemäß Figur 4 ist die Außenform die eines Kreiszylinders mit der Zylinderachse 62. Die Aussparung 59 paßt für einen Kochtopf mit kreiszylindrischer Außenform und diametral seitlich angesetzten Griffen. Für die Griffe sind Ausbuchtungen 13, 14 der Aussparung 59 vorgesehen und im Interesse einer starken Wandstärke sind im Griffbereich äußere Vorsprünge 15, 16. Die Trennebene 17 zwischen dem Oberteil 18 und dem Unterteil 19 liegt auf der Höhe der Griffe aus Gründen wie im Text zu Figur 1 bis 3 erläutert.

Die Wandstärke der beiden Formteile 18, 19 beträgt überall mindestens 30 mm.

In den Boden 71 des Unterteils 19 ist ein Abstandshalter 72 in Form eines Metallringes eingelassen, der für den eingesetzten Topf einen Abstand gemäß Doppelpfeil 73 vom Boden 71 von etwa 5 mm freihält. Ein solcher Abstandshalter kann statt dessen auch die Form eines Kreuzes haben, wie für den Abstandshalter 74 in Figur 4 gestrichelt angedeutet.

Um eine Kochkiste für Töpfe unterschiedlicher Höhe formschlüssig passend zu machen, empfiehlt es sich, einen oder mehrere Distanzausfüller vorzusehen, der formschlüssig in die Aussparung 59 paßt. Ein solcher Distanzausfüller 75 ist in Figur 5 gestrichelt eingezeichnet. Zweckmäßig besteht dieser Distanzausfüller aus Polyurethanhartschaum, und zwar jeweils an der Oberfläche aus verdichtetem Polyurethan mit glatter Oberflächenstruktur. Man kann in die Oberseite eines solchen Distanzausfüllers 75 Abstandshalter 76 entsprechend den Abstandshaltern 72, 74 einlassen beziehungsweise einschäumen.

In Abänderung des dargestellten Ausführungsbeispiels können die Abstandshalter 72, 74, 76 auch lose sein und auf den Boden 71 der Aussparung 59 aufgelegt werden.

Das Ausführungsbeispiel nach Figur 6 hat den gleichen Grundriß wie für das Ausführungsbeispiel nach Figur 4 und 5 gezeichnet, also Kreiszylinderform mit Vorsprüngen 20, 21 für zwei Topfgriffe. Die Trennebene 22 liegt jedoch auf der Höhe des Bodens 23 der Aussparung 24. Bei eingestelltem Topf liegen die beiden Griffe am obersten Ende der für die Griffe vorgesehenen Ausbuchtungen 25, 26, die sich, um Hinterschnitte zu vermeiden, bis zum Boden 23 erstrecken. Die Trennebene 22 weist eine ringförmige Abstufung 27 beider Formteile 28, 29 auf, die dort formschlüssig und verrutschungssicher ineinanderpassen.

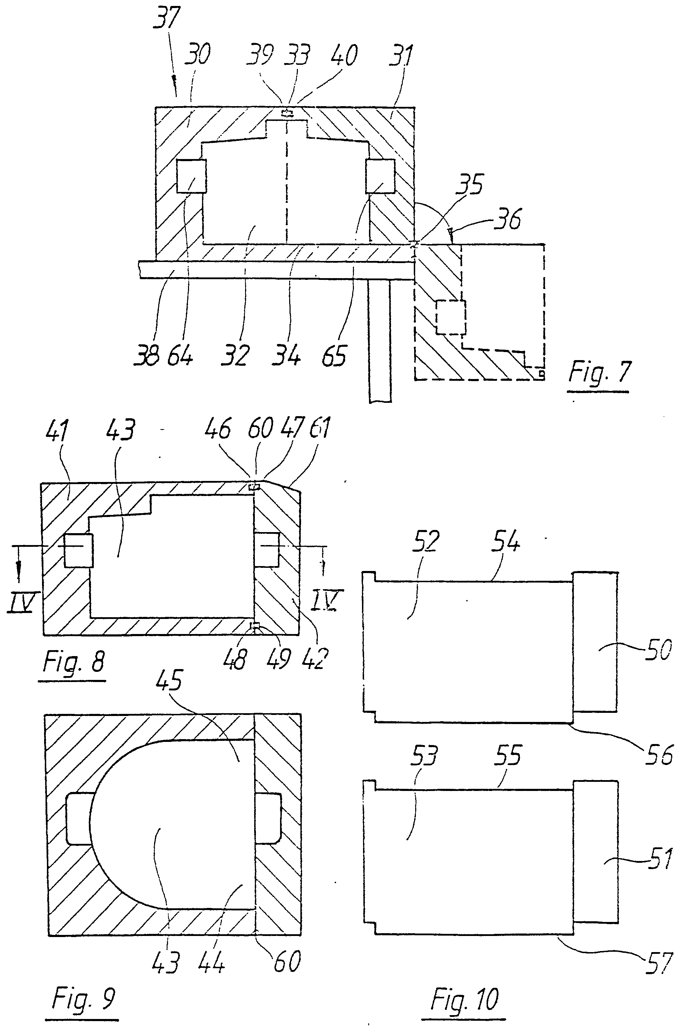

Bei dem Ausführungsbeispiel nach Figur 7 ist die Außenform quaderförmig und die Trennebene 33 der beiden Formteile 30, 31 erstreckt sich senkrecht zur Verbindungslinie zwischen den Ausbuchtungen 64, 65 für die Griffe und vertikal durch die Mitte der Aussparung 32 bis zum Boden 34 der Aussparung und biegt dann rechtwinklig ab entlang dem Boden der Aussparung. Das Formteil 31 ist durch ein Scharnier 35 an das Formteil 30 angelenkt. Die Schwenkachse erstreckt sich senkrecht zur Zeichenebene der Figur 7, so daß das Formteil 31 aus der ausgezogen gezeichneten Schließstellung gemäß Pfeil 36 in die gestrichelt gezeichnete Offenstellung heruntergeschwenkt werden kann. Die Kochkiste 37 steht zu diesem Zweck am vorderen Rand auf einer Tischplatte 38. Mit 39 und 40 sind zwei magnetische Haftungselemente bezeichnet, die in der Trennebene in die beiden Formteile einander paarweise gegenüberstehend eingelassen sind und das Formteil 31 in Schließstellung am Formteil 30 halten.

Auch bei dem Ausführungsbeispiel nach Figur 8 und 9 ist die Außenform quaderförmig und die Trennebene 60 zwischen den beiden Formteilen 41, 42 liegt vertikal. Die Trennebene 60 erstreckt sich hier jedoch neben der Ausnehmung 43 für den Topf, die zu diesem Zweck, um das seitliche Herausziehen des Topfes hinterschnittfrei zu ermöglichen, zusätzliche Aussparungen 44, 45 aufweist. Diese zusätzlichen Aussparungen sind für die thermische Isolierung nachteilig, sie sind hier aber nicht vermeidbar, um das Formteil 42 als schmale Tür auszugestalten. Dieses Teil 42 wird durch magnetische Haftungselemente 46, 47, 48, 49, die paarweise einander gegenüberstehend in der Trennebene in die beiden Formteile 41, 42 eingelassen sind, in Schließstellung gehalten und kann abgezogen werden unter Überwindung der magnetischen Kräfte.

Eine solche Kochkiste, wie sie in Figur 8 und 9 dargestellt ist, kann stapelbar ausgestaltet sein und übereinandergestapelt werden, wobei man, wie aus Figur 10 ersichtlich, die Anordnung zweckmäßig so trifft, daß die als Türen ausgebildeten Formteile 50, 51 alle zur einen Seite, nämlich der Frontseite des Stapels, zeigen. Die Deckfläche und der Boden der anderen Formteile 52, 53 sind zweckmäßig oben mit Ausnehmungen 54, 55 und unten mit Vorsprüngen 56, 57 ausgestattet, derart, daß die Vorsprünge in die Ausnehmungen passen und im Stapel Verrutschungssicherungen bieten. Die als Türen wirkenden Formteile 50, 51 können, wie für das Formteil 42 gezeichnet, ringsherum Abschrägungen 61 aufweisen, um das Öffnen und Schließen im Stapel zu erleichtern.

Bei allen Ausführungsformen bestehen die beiden Formteile aus Polyurethanhartschaum, der in den inneren und äußeren Oberflächenbereichen in einer Tiefe von etwa 5 mm verdichtet ist und glatte Oberflächen bildet.

Gewerbliche Verwertbarkeit

Durch den Hartschaummantel wird hohe Isolation und hohe Festigkeit gewährleistet, so daß eine zusätzliche stabilisierende Umhüllung nicht erforderlich ist, weil diese durch die oberflächliche Verdichtung hinreichend erzielt werden kann. Die durch die oberflächliche Verdichtung erzielte glatte Oberfläche ist außerdem leicht sauberzuhalten. Dadurch und auch durch das insgesamt geringe Gewicht und den verhältnismäßig geringen Platzbedarf ist die Kochkiste leicht handhabbar.

Durch die toleranzarme Ausgestaltung der Aussparung wird das unvermeidliche Volumen an miteingeschlossener Luft minimal klein gehalten und die thermische Isolierung begünstigt.

**Patentansprüche**

1. Kochkiste zum Nachgaren von in einem Kochtopf enthaltenen, vorgewärmten Lebensmitteln mit einem zweiteiligen Formkörper (1, 2) aus thermisch isolierendem Hartschaum, in dem die Außenform des zugehörigen Kochtopfes (7) einschließlich aller Topf- und Deckelgriffe (8, 9 + 12) toleranzarm ausgespart ist, mit Aussparungen (6) in jedem der beiden Formteile (1, 2), die in Einschubrichtung frei von Hinterschnitten sind, dadurch gekennzeichnet, daß die Oberflächenbereiche beider Formteile (1, 2) innen und außen aus verdichtetem Hartschaummaterial mit glatter Oberflächenstruktur bestehen und daß am Boden (71) der Aussparung (59) des unteren Formteils (19) ein hitzebeständiger Abstandshalter (72) aus Metall eingelassen und verankert ist, der für den eingesetzten Topf einen Abstand (73) vom Boden (71) freihält.

2. Kochkiste nach Anspruch 1, dadurch gekennzeichnet, daß der Abstand (73) etwa fünf mm (Millimeter) beträgt.

3. Kochkiste nach Anspruch 1, dadurch gekennzeichnet, daß ein formschlüssig in die Aussparung (59) des unteren Formteils (19) passender, sich nur über einen Bruchteil der Höhe der Aussparung erstreckender Distanzausfüller (75) vorgesehen ist, und daß der Abstandshalte (76) an der Oberfläche des Distanzausfüllers (75) verankert ist.

4. Kochkiste nach Anspruch 2 oder 3, dadurch gekennzeichnet, daß der Abstandshalter (76) aus Metall besteht.

5. Kochkiste nach einem der Ansprüche 2-4, dadurch gekennzeichnet, daß der Abstandshalter (76) ein Ring ist.

6. Kochkiste nach einem der Ansprüche 2-4, dadurch gekennzeichnet, daß der Abstandshalter (76) ein Kreuz ist.

7. Kochkiste nach einem der vorhergehenden Ansprüche, dadurch gekennzeichnet, daß die Mindestwandstärke (10) des Formkörpers (1) im Bereich seitlicher Topfgriffe (8, 9) 20 mm (Millimeter) und in den übrigen Bereich 30 mm beträgt.

8. Kochkiste nach einem der vorhergehenden Ansprüche, dadurch gekennzeichnet, daß die beiden Formteile (1, 2) entlang ihrer Trennebene (3) formschlüssig abgestuft sind.

9. Kochkiste nach einem der vorhergehenden Ansprüche, gekennzeichnet durch die Form eines Quaders mit horizontaler Trennebene und Platz für seitliche Topfgriffe in den Eckbereichen des Grundrisses (Fig. 1-3).

10. Kochkiste nach einem der Ansprüche 1-8, gekennzeichnet durch die Außenform eines Kreiszylinders mit einer Aussparung für einen kreiszylindrischen Topf und mit Ausbuchtungen (13, 14) für seitliche Topfgriffe, mit einer horizontalen Trennebene (17) auf der Höhe der Topfgriffe.

### Claims

1. Cooking box for completing the cooking of preheated food contained in a saucepan, consisting of two parts (1, 2) made of thermally insulating rigid expanded polyurethane, in which the external form of the appropriate saucepan (7) including all saucepan and lid handles (8, 9 + 12) is moulded with very little tolerance, with recesses (6) in each of the two parts (1, 2) which in the direction of insertion are free of counterdrafts, marked in that the surfaces of both parts (1, 2) consist at the inside and outside of high-density rigid expanded polyurethane with smooth surface and in that at the bottom (71) of the mould (59) of the lower part (19) a heat-resisting spacer (72) made of metal is inserted and fastened which clears the inserted saucepan from the bottom.

2. Cooking box according to claim 1, marked in that the clearance (73) is approx. 5 mm (millimeters).

3. Cooking box according to claim 1, marked in that a distance filler (75) is provided which fits positively into the mould (59) of the lower part (19) and extends only a fraction of the height of the mould and in that the spacer (76) is fastened on the surface of the distance filler.

4. Cooking box according to claims 2 or 3, marked in that the spacer (76) is made of metal.

5. Cooking box according to one of the claims 2-4, marked in that the spacer (76) is a ring.

6. Cooking box according to one of the claims 2-4, marked in that the spacer (76) is a cross.

7. Cooking box according to one of the preceding claims marked in that the minimal wall thickness (10) of part (1) is 20 mm (millimeters) in the region of the lateral saucepan handles (8, 9) and 30 mm in the rest.

8. Cooking box according to one of the preceding claims marked in that both parts (1, 2) are positively reduced along their parting plane.

9. Cooking box according to one of the preceding claims, marked by the form of a broad stone with a horizontal parting plane and room for lateral saucepan handles in the corner regions of the layout (fig. 1-3).

10. Cooking box according to claims 1-8, marked by the external shape of a regular cylinder with a mould for a circular cylindrical saucepan and with indentations (13, 14) for lateral handles, with a horizontal parting plane (17) at the level of the saucepan handles.

### Revendications

1. Auto-cuiseur pour finir de cuire des aliments contenus dans une marmite et préchauffés, en deux parties (1, 2) fabriqué en mousse dure isolant thermiquement, dans lequel est évidé avec peu de tolérance la forme extérieure de la marmite appartenante (7) inclusive toutes les anses de la marmite et du couvercle (8, 9 + 12) avec évidements (6) dans chacune des deux parties (1, 2) qui dans la direction du tiroir sont exempts de contre-dépouilles, caractérisé par le fait que les surfaces des deux parties (1, 2) consistent à l'intérieur et à l'extérieur en mousse dure densifiée avec structure de la surface lisse et que, au fond (71) de l'évidement (59) de l'élément de pied (19) est encastré et ancré un tasseau métallique résistant à la chaleur (72) que laisse libre pour la marmite un espace (73) du fond (71).

2. Auto-cuiseur selon spécification du brevet 1, caractérisé par le fait que l'espace (73) a environ 5 mm.

3. Auto-cuiseur selon spécification du brevet 1,

caractérisé par le fait, qu'une pièce d'écartement est prévue laquelle est à la mesure pour l'évidement (59) de la partie inférieure (19) et laquelle s'étend seulement sur une fraction de la hauteur de l'évidement et que le tasseau (76) est ancré sur la surface de la pièce d'écartement (75).

4. Auto-cuiseur selon spécifications 2 ou 3, caractérisé par le fait que le tasseau (76) est en métal.

5. Auto-cuiseur selon l'une des spécifications 2-4, caractérisé par le fait que le tasseau (76) est un anneau.

6. Auto-cuiseur selon l'une des spécifications 2-4, caractérisé par le fait que le tasseau (76) est une croix.

7. Auto-cuiseur selon l'une des spécifications précédentes, caractérisé par le fait, que l'épaisseur minimale (10) de la partie (1) est 20 mm dans la région des anses latérales (8, 9) et 30 mm dans le reste.

8. Auto-cuiseur selon l'une des spécifications précédentes, caractérisé par le fait que les deux parties (1, 2) sont étagées le long de leur plan de joint (3) à fermeture du moule.

9. Auto-cuiseur selon l'une des spécifications précédentes, marqué par la forme à carreau de pierre avec plan de joint horizontal et place pour anses latérales dans les angles du plan (Fig. 1-3).

10. Auto-cuiseur selon l'une des spécifications 1-8 marqué par la forme extérieure d'un cylindre circulaire avec un évidement pour une marmite cylindrique circulaire et avec courbures (13, 14) pour anses latérales, avec un plan de joint horizontal (17) au niveau des anses.

Fig.1

Fig. 2

Fig.3

Fig. 4

Fig. 6

Fig. 5

Fig. 7

Fig. 8

Fig. 9

Fig. 10

2